# EUROPEAN PATENT SPECIFICATION

(11) **EP 1 506 466 B1**
(45) Date of publication and mention of the grant of the patent: **19.07.2006**
(21) Application number: 03718658.2
(22) Date of filing: 06.05.2003
(51) Int. Cl.: G05D 23/00, G08C 19/00

(54) **HEAT BURNER SURVEILLANCE**
HEIZBRENNER-BEOBACHTUNG
SURVEILLANCE DE BRULEUR DE CHAUFFAGE

(30) Priority: 10.05.2002 DK 200200719
(43) Date of publication of application: 16.02.2005
(73) Proprietor: Tell It Online ApS, 2900 Hellerup (DK)
(72) Inventor: MERRILD, Frans, DK-2900 Hellerup (DK)
(74) Representative: HOEIBERG A/S
(86) International application number: PCT/DK2003/000298
(87) International publication number: WO 2003/096134

(56) References cited:
- EP-A- 0 986 239
- EP-A- 1 196 002
- DE-A- 4 010 763
- DE-A- 4 129 549
- US-A- 5 379 638
- US-A- 6 098 893

## Description

### Field of invention

The present invention relates to a method of surveilling a heat burner combining the hydrostatic principle in combination with weather determinations by using software.

### Background of invention

Traditionally, the status of a heat burner is measured via a parallel cable connection to the control unit of and the power supply to the heat burner. Hereby it is possible to get an on/off signal that indicates various failures of the heat burner, such as failure of the burner to start, or power failure resulting in the burner ceasing to function. Furthermore, sophisticated systems with a range of additional sensors are known in the art. These systems are capable of determining a variety of parameters and adjust the system accordingly. One example is a system wherein the indoor temperature is reduced during the daytime when residents are not at home.

There are a number of ways in which the consumption of for example oil of a heat burner may be measured. The consumption of heating oil is basically measured in three ways: 1) by a level sensor in the container, 2) by a flow meter mounted on the suction pipe connecting the container to the burner, or 3) by calculating operation hours x consumption of oil per hour measured by a control unit.

However, the existing heat surveillance techniques are time consuming to install and need skilled fitters to carry out the installation. Therefore, the known techniques are rather costly for the average consumer.

The present invention provides an improved heat surveillance system capable of determining if there is an abnormal situation relating to the heat system and/or how efficient the heat system is operating without interference in the control unit of the burner. Further, the present invention presents less complicated hardware operable by non-experts. Thus, the present invention is simple to use and economically interesting in the market place of heating systems.

### Summary of invention

The present invention concerns a method for monitoring a heat burner, comprising the steps of
- establishing a reading result of the consumption and/or consumption frequency of a liquid consumed by the heat burner (A),
- determining an environmental temperature and/or an efficacy temperature (B), and
- correlating said environmental temperature and/or an efficacy temperature (B) with the consumption and/or consumption frequency reading result (A), and
- determining whether an abnormal heat situation has occurred, and/or
- whether the burner is operating efficiently, followed by
- transmitting information of the heat situation and/or burner efficiency via means of telecommunication to a relevant receiver.
   In a further aspect the invention relates to the use of the method for monitoring and/or controlling heat systems.

### Description of Drawings

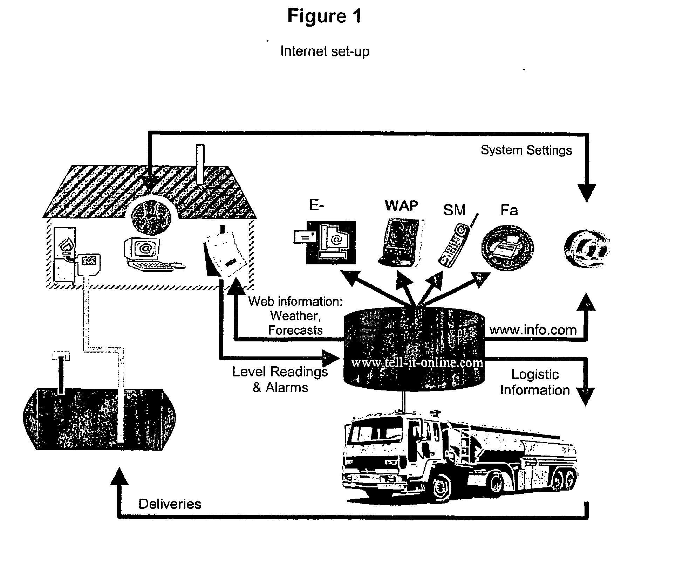

Figure 1 depicts a heat surveillance system, wherein the process is carried out by using a pressure differential transmitter measuring the vacuum/pressure in the suction pipe, temperature sensors, a micro-computer, and an Internet connection via e.g. an ASYNC modem. Besides measuring the levels of oil according to the hydrostatic principle, the RF Bridge units each measures two temperatures. Via a sensor mounted directly on the board it measures the local temperature, and via an additional external sensor it makes a temperature reading of the hot-water (RF Bridge) and the temperature of the radiator (modem/RF Bridge). Weather information may be downloaded from the central server via the Internet or it may be obtained through local outdoor weather information (degree-days), or be a combination of Internet and local information.

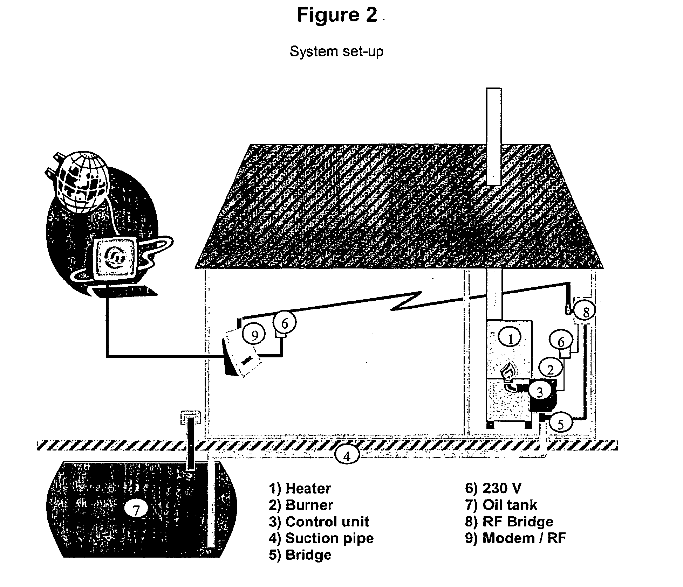

Figure 2 depicts the T-piece sensor mounted between the end of the suction pipe (4) from the oil tank (7) and the burner (2), and linked to the RF Bridge (8). The RF Bridge is powered from the same power supply (6) as the burner, and links the sensor to the Internet via the modem/RF bridge (9). Both the RF Bridge and the modem/RF bridge have temperature sensors build in, input for external temperature sensors, and has an internal RS485 network by which is communicates with the T-piece sensor and other units. In addition to the measured levels via the hydrostatic principle the RF Bridge units each measures two temperatures. Via a sensor mounted directly on the board it measures the local temperature, and via an additional external sensor it makes a temperature reading of the hot-water (RF Bridge) and the temperature of the radiator (modem/RF bridge). Weather information may be downloaded from the central server via the Internet or it may be obtained through local outdoor weather information (degree-days), or be a combination of Internet and local information.

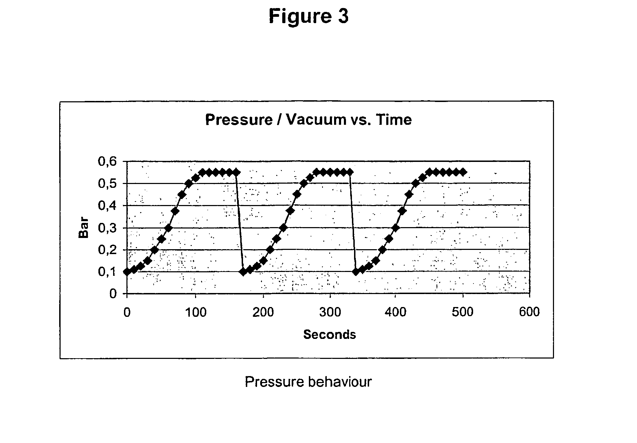

Figure 3 shows the pressure behaviour of liquid in a container, such as oil. The cycle depicted is the consumption of liquid in the container. The difference in liquid levels can be used to calculate the actual liquid consumption.

### Detailed description of the invention

The present invention is interested in overcoming the problems associated with conventional heating surveillance systems, such as overcoming the costly and time consuming operation of parallel cabling to the control unit of the burner, and overcoming the physical measurements via the control unit of whether there is a burner failure, and the additional costly sensors for checking additional abnormal situations and having the need for engineers/skilled fitters to install and calibrate the system on site.

The present invention combines the hydrostatic principle with temperature readings and weather information, i.e. this invention is using software algorithms together with the hydrostatic principle.

### Hydrostatic principle

The hydrostatic principle is based on the fact that every time the heat-burner starts the pressure/vacuum gradually increases, and when the heat-burner stops the pressure immediately decreases to the starting level. By analysing the pattern or pressure values during this cycle it is possible to determine the highest pressure value and the lowest pressure, wherefrom the product level in a container, may be determined and subsequently the amount of liquid used may be determined. The determination of the highest and the lowest pressure values may be conducted by any suitable means. For example each pressure value maybe read out to a printer followed by the user's determination of the highest and lowest pressure values and subsequent subtraction.

In a preferred embodiment the determination of the highest and lowest pressure values and the subsequent subtraction is carried out in a computer microprocessor device connected to a sensor, wherein computations are carried out, such as a computer microprocessor device. Each processed value is read into the computer microprocessor device and pressure therein. By determining the relevant pressure values directly from the pressure value pattern, the need to correlate pressure values to pump function, i.e. whether the pump is on or off becomes superfluous. It is not necessary to physically measure the outtake from a container since the connection to any pumps or flow meter or control unit for such entities is superfluous.

The invention uses the principle behind the hydrostatic pressure known in the art and explained above. Thus, the present invention also relates to a method further comprising the steps of
- determining a plurality of pressure values in a suction pipe connecting said heat burner with a container of liquid, such as oil during at least one cycle of suction and non-suction of the pipe (C),
- determining a lowest pressure value and a highest pressure value in the suction pipe during the at least one cycle (D),
- subtracting the lowest pressure value from the highest pressure value (E),
- correlating said result to a predetermined liquid level value (F), and thereby
- obtaining a reading result of the level of the liquid in said container (G),
- correlating the result of at least one of the parameters of (C) to a predetermined value of said at least one parameter of (C),
- optionally, repeating the above steps (C) to (G) at least twice.

### Pressure values

By the term "pressure value" is meant the value read out from the sensor. In one embodiment of the invention the determination of a plurality of pressure values is performed continuously. By "continuously" is meant that the time frame between one individual determination of a pressure value using software of the invention and a second individual determination of a pressure value is identical to the time frame between the second individual determination of a pressure value and a third individual determination of a pressure value. Each pressure value is read out from the sensor, preferably to a computer microprocessor device an example of the pattern of pressure values determined during these cycles is shown in Figure 3, wherein each diamond (◆) represents a pressure value. For each cycle the highest (0.55 bar) and lowest (0.1 bar) pressure value is determined as discussed above from the pattern, and subsequently the two values are subtracted obtaining a subtraction result, in this example numerically being 0.45 bar.

The subtraction result is corrected to a predetermined liquid level value of said container, and a reading result of the present liquid level is obtained from the correlation. In case the correlation is conducted in a computer microprocessor device the reading result may be read out from the computer microprocessor device by a display and/or printer connected to the computer microprocessor device. In one embodiment the predetermined liquid level value is conducted by measuring the liquid level when the container is full, for example by use of a metering device and simultaneously registering the subtraction result. Based on the information the correlation may be conducted for each subtraction result.

In another embodiment the determination of a plurality of pressure values is performed discontinuously. By "discontinuously" is meant that the determinations of the pressure values are not performed within predefined time intervals, or having predefined time intervals between the individual determinations. In one embodiment "discontinuously" means at random.

In another embodiment the point in time for determining the next pressure values is dependent on the present previously obtained pressure values.

Thus, in one embodiment the difference between the latter two pressure values settles when the system should determine the next pressure value. For example a decreasing and/or increasing trend in pressure value "triggers" the onset of a new pressure value with a smaller time frame than a difference, which is substantially zero.

According to the invention the plurality of pressure values may be determined both during suction and non-suction.

### Time period between determinations

In one aspect of the invention the time period between the determination of a first pressure value and the determination of a second pressure value is done continuously, as determined by for example the user. In one embodiment the predetermined time period is entered into the system, which is also capable of conducting the steps of: determining the pressure value, subtracting the values, correlating the values. Such system may for example be relevant software connected to the pressure sensor.

The time interval between one such first determination and one such second determination may in one embodiment be substantially less than 1.0 second, such as less than 0.5 second, for example less than 0.1 second, such as less than 0.05 second for example less than 0.01 second. In another embodiment the time interval may be substantially less than 10.0 seconds, such as less than 5.0 seconds. In yet another embodiment the time interval may be substantially less than 60.0 seconds, such as less than 30.0 seconds, for example less than 20.0 seconds. In yet a further embodiment the time interval may be substantially less than 120.0 seconds, such as less than 100.0 seconds, for example less than 80.0 seconds.

### Time period

In another aspect of the invention the time period between the determination of the first pressure value and the determination of the second value is within one cycle of the suction pipe. By "cycle of the suction pipe" is meant the time it takes from the onset (resting pressure value) of the increase in pressure a first determination, for example when liquid is pumped out of the container to the time when the pressure value is back at the resting pressure value. (Figure 3 depicts such "suction" cycles).

The outlet of the present container may in one embodiment be capable of attracting the liquid from the suction pipe through the means of pumping, and in another embodiment the outlet is capable of attracting the liquid from the suction pipe through the means of combustion.

As previously mentioned the hydrostatic principle is applied to the present invention so as to surveil the burner via the suction pipe connecting said burner with the oil container, to ensure that heat and hot water are provided for. The measurements made via the hydrostatic principle, wherein the pressure (positive/negative) in the suction pipe is converted into a calculated product level, which in turn is used to calculate the consumption and/or the consumption frequency of a heat burner, such as an oil burner. By analysing the calculated level readings and the environmental temperature readings and/or the efficacy temperature readings and/or the degree-day information, it is possible to determine if there is an abnormal heat situation and/or whether the burner is operating efficiently.

### Consumption

According to the invention by consumption is meant how much liquid, such as fuel a burner is using. By consumption frequency is meant the pattern with which a heat burner is using a fuel, such as oil. For example how fast the fuel is used and with what intervals the heat burner is actually actively burning fuel.

According to the invention the surveillance of the heat burner may be performed by in one step to determine the fuel consumption alone or in combination with the fuel consumption pattern. It is also possible to determine the consumption pattern alone.

In one embodiment of the invention the consumption and/or consumption frequency is established by correlating said consumption and/or consumption frequency reading with a predetermined consumption and/or consumption frequency reading.

### Temperature parameters

According to the invention the term environmental temperature covers for example temperatures determined outdoor and/or indoor.

By an efficacy temperature is meant a temperature which has been reached by means of energy consumption. For example hot water in a reservoir heated by a burner consuming oil.

According to the invention the environmental and/or efficacy temperature parameters and/or number of degree-days are determined alone or in combination.

The term degree-day is determined by starting from an indoor temperature of 17°C and deducting the average outdoor temperature. If the outdoor temperature is 17°C then the number of degree-days are 0. If the outdoor temperature is 10°C then the number of degree-days are 7. This simple equation may be adjusted according to the state of the wind. During the summer there may be few or no degree-days, whereas during the winter the number of degree-days may increase significantly.

Information about the number of degree-days may be from the Internet or from a local source. Information from the latter will be more accurate.

The consumption of liquid, such as oil is linear proportional to the number of degree-days according to the formula: Y = AX + B, where B is the basis consumption of oil, A is the increase in oil consumption per increase in degree-days. By applying the formula it is possible to estimate the minimum amount of oil the burner requires to heat for example water.

### Determining temperature

Within the invention it is possible in addition to determining the indoor temperature and/or the outdoor temperature and/or the number of degree-days, to determine the temperature of pipe water and/or the temperature of at least one radiator. The additional temperature information may be used as alternative temperature information, or they may add to the temperature information obtained through the Internet and/or and thereby contribute to a more precise determination of the temperature.

### Monitor

According to the invention the method for monitoring a heat burner, comprises the steps of
- establishing a reading result of the consumption and/or consumption frequency of a liquid consumed by the heat burner (A),
- determining an environmental temperature and/or an efficacy temperature (B), and thereby
- correlating said environmental temperature and/or an efficacy temperature (B) with the consumption and/or consumption frequency reading result (A), and
- determining whether an abnormal heat situation has occurred, and/or
- whether the burner is operating efficiently, followed by
- transmitting information of the heat situation and/or burner efficiency via means of telecommunication to a relevant receiver.

### Method for determinating symptoms

Accordingly, the present invention is determining a consumer heat pattern as a means of diagnosing parameters associated with the operability of a heat burner. By this is meant that the invention can be used to formulate a diagnosis of specific problems in the heating system needing to be addressed. Such diagnosis may be that the oil container needs cleaning. For example, if the time necessary for the burner to run in order to maintain the temperature of the hot water is increasing, and the number of degree-days is constant then this could indicate that more oil is needed (e.g. 7 days before the agreed reorder level is reached).

### Abnormal situation /Alarm

Abnormal situations according to the invention are determined by comparing the calculated consumption of oil per minute and consumption frequency (based on the hydrostatic level readings) with the measured temperatures and degree-day information. Hereby, the present surveillance system may generate alarms in situations such as the following:
- Abnormal consumption / burner settings need to be modified: in case the number of degree-days changes and the oil consumption does not change accordingly. For example if the number of degree-days increases (= the temperature drops) and the oil consumption does not increase and/or the indoor temperature is dropping as well.
- Decreasing burner efficiency: basically the present invention calculates how much liquid, such as oil the burner requires to increase the hot water temperature by 1° celcius. This is done by measuring the temperature of the hot-water reservoir, measuring the oil consumed per day, measuring the indoor temperature and number of degree-days. In case this ratio is increasing the efficiency of the burner is decreasing. The burner/heating system then needs a service visit to be cleaned.
- Burner not running: consumption frequency is too low in order to guarantee the agreed minimum temperature of the hot-water reservoir. This is done by measuring the temperature of the hot-water reservoir and measuring the oil consumed / the consumption frequency. An indication that something is wrong is in case the temperature of the hot-water reservoir drops, and the burner is not running as often as it used to in order to maintain the minimum temperature In this situation it is most likely that the burner has stopped running, and as a minimum the burner will use 1 litre of oil per day just to be in operation.
- No power: the consumption and temperature readings from the boiler room are transmitted wireless to the modem at e.g. the living room of the house. This is done continuously and if no information is received at the modem within a certain time frame it is probably due to lack of power to the transmitting module in the boiler room. The modem is able to transmit this error to the central server as the modem has a build-in battery, which it uses to call the central server in case of power failure.

### Internet

The Internet plays a vital role in the present invention. According to the invention the measured consumption for example of oil over time is compared with weather information, and known behaviour of the site. As mentioned above this is to determine if there is an abnormal situation. The invention provides for the system settings to be done via the Internet as well.

In one embodiment of the invention the outdoor weather information is obtained through the Internet (degree-days). However, the weather information may be measured locally.

In a second embodiment the abnormal situation information such as temperature changes is transmitted through the Internet.

In a further embodiment the information transmitted via the Internet through e-mailing and/or faxing and/or SMS messaging.

### Placement of container/burner

According to the invention the container may in one embodiment be placed underground. In a second embodiment the container may be placed over ground.

Independent from the above the burner of the present container may be placed underground, or it may be placed over ground.

### Container

The container of the invention may be a tank, for example a tank for containing oil.

### Liquid

The liquid which level is determined according to the invention may be any liquid in a container, such as oil or gasoline

### Pressure sensor

In one embodiment of the invention the pressure sensor is a differential transmitter. In a preferred embodiment the pressure sensor is a T-piece sensor, where analogue signals may be converted into digital signals by the computer microprocessor device.

In a preferred embodiment any temperature drift and non-linearity of the sensor that could lead to lesser precision may be compensated for by the present invention. This provides more precise determinations of the pressure values. For example the compensation, of the differential transmitters none linearity, is done prior to the installation by adjusting the digital output to a known output from a master sensor. Hereby, the worst-case scenario shows that the precision is improved from +/- 10 mm to +/- 1 mm. Upon installation the measured product level may be adjusted according to the actual product level in the container - this is done via an external device, for example a dip stick reading.

### Software

According to the invention the time period between the determination of the first pressure value and the determination of the second pressure value is done continuously via the intelligence of software.

According to the invention software is also used to carry out other functions. The following software may be applied invention a pressure differential transmitter to measure the vacuum/pressure in the suction pipe, temperature sensors, a micro-computer, and an Internet connection via e.g. an ASYNC modem. All units are relatively inexpensive and conventional off-the-shelf items.

In one embodiment the modem frequently connects to the central server via the Internet. The frequency with which the modem contacts the Internet is determined by the consumption rate of the site. Once connected the central server receives the data stored at the site and transmits weather information back to the site. In one aspect of the invention during an abnormal situation the system notifies the customer/service technician via e-mail, SMS, fax etc. In another aspect in case it is time to refill the container information is send to the supplier of the customer. It is within the present scope that the customer is able to change the system settings - such as desired minimum indoor temperature - directly via a homepage on the Internet.

The basic principle of the present software is that if the burner is turned on it has to run by a certain frequency and will use a minimum of fuel for example oil. Furthermore, the efficiency of the burner is depending on lots of different factors - like the size, model and general condition of the burner. Therefore, in order to maintain a certain temperature inside a home the burner has to operate for a specific number of minutes in correlation with the number of degree-days. So the colder it gets outside the longer the burner has to run in order to keep the same temperature inside.

### Use

In a further aspect the invention may be used for monitoring and/or controlling heat systems.

The invention may thus be used for reporting the actual level of liquid in the container as well as the amount of liquid consumed by subtracting the actual liquid level from the initial liquid level, knowing the relevant parameters of the container. Thereby, the method and system according to the invention may be provided with an alarm in situations where such an alarm is needed. This could for example be the case in circumstances where the container is a tank in a heating system containing oil and the knowledge of the level of oil is important for the success of the continuous heating of a building.

Accordingly, the method and system of the invention may be used for monitoring a heat system and thereby controlling heating of buildings, time for refill and if the container is empty.

### Example

In one embodiment of the invention a system as shown in Figure 1 is arranged. The process is carried out by using a pressure differential transmitter measuring the vacuum/pressure in the suction pipe, temperature sensors, a micro-computer, and an Internet connection via e.g. an ASYNC modem. Besides measuring the levels of oil according to the hydrostatic principle, the RF Bridge units each measure two temperatures. Via a sensor mounted directly on the board it measures the local temperature, and via an additional external sensor it makes a temperature reading of the hot-water (RF Bridge) and the temperature of the radiator (modem/RF bridge). Weather information is downloaded from the central server via the Internet. The computer microprocessor device has software incorporated capable of:
1. Converting the analogue signals from the sensor into digital readings
2. Storing the current lowest and highest readings, and time of occurrence
3. Calculating the actual product level in the tank by subtracting the lowest from the highest reading. The higher the difference, the more is in the tank
4. Compensating for temperature drift and the none linearity of the sensor
5. Storing the levels at predefined times.

The determination of the highest and lowest pressure values and the subsequent subtraction is carried out in the computer microprocessor device connected to the sensor, enabling a system capable of surveillance of heat systems.

## Claims

1. A method for monitoring a heat burner, comprising the steps of
- establishing a reading result of the consumption and/or consumption frequency of a liquid consumed by the heat burner (A),
- determining an environmental temperature and/or an efficacy temperature (B), and
- correlating said environmental temperature and/or an efficacy temperature (B) with the consumption and/or consumption frequency reading result (A), and
- determining thereby whether an abnormal heat situation has occurred, and/or
- whether the burner is operating efficiently, followed by
- transmitting information of the heat situation and/or burner efficiency via means of telecommunication to a relevant receiver.

2. The method according to claim 1, wherein said reading result (A) is established by correlating said consumption and/or consumption frequency with a predetermined consumption and/or consumption frequency.

3. The method according to claim 1, wherein the environmental temperature and/or efficacy temperature (B) is an indoor room temperature and/or an outdoor temperature and/or a hot water reservoir temperature and/or number of degree-days.

4. The method according to claim 1, further comprising the steps of
- determining a plurality of pressure values in a suction pipe connecting said heat burner with a container of liquid, such as oil during at least one cycle of suction and non-suction of the pipe (C),
- determining a lowest pressure value and a highest pressure value in the suction pipe during the at least one cycle (D),
- subtracting the lowest pressure value from the highest pressure value (E),
- correlating said result to a predetermined liquid level value (F), and thereby
- obtaining a reading result of the level of the liquid in said container (G),
- correlating the result of at least one of the parameters of (C) to a predetermined value of said at least one parameter of (C),
- optionally, repeating the above steps (C to G) at least twice.

5. The method according to claim 1, wherein the temperature of pipe water and/or the outdoor temperature of pipe water and/or the temperature of at least one radiator is determined.

6. The method according to claim 4, wherein said plurality of pressure values is being determined both during suction and non-suction.

7. The method according to claim 1, wherein the liquid is oil.

8. The method according to claim 1, wherein the pressure value in the suction pipe is determined by a pressure sensor.

9. The method according to claim 8, wherein the pressure sensor is a differential transmitter.

10. The method according to claim 7, wherein the pressure sensor is a T-piece sensor.

11. The method according to claim 8, wherein drift of temperature and non-linearity of the sensor is compensated for.

12. The method according to any of the preceding claims, wherein the time period between the determination of the first pressure value and the determination of the second value is within one cycle of the suction pipe.

13. The method according to claim 1, wherein an alarm is initiated at the rise of an abnormal situation.

14. The method according to claim 13, wherein initiation of the alarm is when the hot water temperature is decreasing below a predetermined value.

15. The method according to claim 13, wherein initiation of the alarm is when the indoor temperature is decreasing below a predetermined value.

16. The method according to claim 13, wherein initiation of the alarm is when the burner is consuming an increased amount of liquid compared to a predetermined value.

17. The method according to claim 13, wherein initiation of the alarm is when the burner is consuming a decreased amount of liquid compared to a predetermined value.

18. The method according to claim 13, wherein initiation of the alarm is when there is a power failure.

19. The method according to claim 13, wherein initiation of the alarm is when the parameters (A) as defined in claim 1 are changing.

## Patentansprüche

1. Verfahren zur Überwachung eines Brenners, welches folgende Schritte aufweist:
- Erstellen eines Leseergebnisses des Verbrauchs und/oder der Verbrauchsfrequenz einer Flüssigkeit, die von dem Brenner (A) verbraucht wird,
- Bestimmen einer Umgebungstemperatur und/oder einer Wirktemperatur (B), und
- Korrelieren der Umgebungstemperatur und/oder der Wirktemperatur (B) mit dem Verbrauchs- und/oder Verbrauchsfrequenz-Leseergebnis (A), und
- Bestimmen **dadurch**, ob eine abnorme Wärmesituation aufgetreten ist, und/oder
- ob der Brenner wirksam arbeitet, gefolgt von
- Übertragen von Informationen der Heizsituation und/oder Brennerwirksamkeit über Telekommunikationseinrichtungen zu einem relevanten Empfänger.

2. Verfahren nach Anspruch 1, wobei das Leseergebnis (A) erstellt wird durch Korrelieren des Verbrauchs und/oder der Verbrauchsfrequenz mit einem vorbestimmten Verbrauch und/oder einer vorbestimmten Verbrauchsfrequenz.

3. Verfahren nach Anspruch 1, wobei die Umgebungstemperatur und/oder Wirktemperatur (B) eine Innenraumtemperatur und/oder eine Außentemperatur und/oder eine Heißwasservorratsbehältertemperatur und/oder eine Anzahl von Grad-Tagen ist.

4. Verfahren nach Anspruch 1, das weiterhin folgende Schritte aufweist:
- Bestimmen einer Mehrzahl von Druckwerten in einer Ansaugleitung, die den Brenner mit einem Behälter mit Flüssigkeit, wie beispielsweise Öl, verbindet, während wenigstens eines Ansaug- und Nicht-Ansaug-Zyklusses der Leitung (C)
- Bestimmen des niedrigsten Druckwerts und des höchsten Druckwerts in der Ansaugleitung während wenigstens eines Zyklusses (D),
- Abziehen des niedrigsten Druckwertes von dem höchsten Druckwert (E),
- Korrelieren dieses Ergebnisses mit einem vorbestimmten Flüssigkeitsniveauwert (F), und **dadurch**
- Erhalten eines Leseergebnisses des Niveaus der Flüssigkeit in dem Behälter (G),
- Korrelieren des Ergebnisses wenigstens von einem der Parameter von (C) mit einem vorbestimmten Wert des wenigstens einen Parameters von (C),
- optional Wiederholen der vorstehenden Schritte (C bis G) wenigstens zwei Mal.

5. Verfahren nach Anspruch 1, wobei die Temperatur des Leitungswassers und/oder die Außentemperatur des Leitungswassers und/oder die Temperatur von wenigstens einem Heizkörper bestimmt wird.

6. Verfahren nach Anspruch 4, wobei die Mehrzahl von Druckwerten sowohl während des Ansaugens als auch während des Nicht-Ansaugens bestimmt wird.

7. Verfahren nach Anspruch 1, wobei die Flüssigkeit Öl ist.

8. Verfahren nach Anspruch 1, wobei der Druckwert in der Ansaugleitung von einem Drucksensor bestimmt wird.

9. Verfahren nach Anspruch 8, wobei der Drucksensor ein Differentialgeber ist.

10. Verfahren nach Anspruch 7, wobei der Drucksensor ein T-Stück-Sensor ist.

11. Verfahren nach Anspruch 8, wobei die Temperaturverschiebung und die Nicht-Linearität des Sensors kompensiert werden.

12. Verfahren nach einem der vorhergehenden Ansprüche, wobei der Zeitraum zwischen der Bestimmung des ersten Druckwerts und der Bestimmung des zweiten Druckwerts sich innerhalb eines Zyklusses der Ansaugleitung befindet.

13. Verfahren nach Anspruch 1, wobei ein Alarm ausgelöst wird beim Auftreten einer abnormen Situation.

14. Verfahren nach Anspruch 13, wobei das Auslösen des Alarms erfolgt, wenn die Temperatur des Heißwassers unter einen vorbestimmten Wert absinkt.

15. Verfahren nach Anspruch 13, wobei das Auslösen des Alarms erfolgt, wenn die Innenraumtemperatur unter einen vorbestimmten Wert sinkt.

16. Verfahren nach Anspruch 13, wobei das Auslösen des Alarms erfolgt, wenn der Brenner eine erhöhte Menge von Flüssigkeit verglichen mit einem vorbestimmten Wert verbraucht.

17. Verfahren nach Anspruch 13, wobei das Auslösen des Alarms erfolgt, wenn der Brenner eine geringere Menge an Flüssigkeit verbraucht, verglichen mit einem vorbestimmten Wert.

18. Verfahren nach Anspruch 13, wobei das Auslösen des Alarms erfolgt, wenn eine Energielücke auftritt.

19. Verfahren nach Anspruch 13, wobei das Auslösen des Alarms erfolgt, wenn sich die Parameter (A), wie in Anspruch 1 definiert, verändern.

## Revendications

1. Procédé pour surveiller un brûleur de chauffage, comprenant les étapes consistant à
- établir un résultat de lecture de la consommation et / ou de la fréquence de consommation d'un liquide consommé par le brûleur de chauffage (A),
- déterminer une température environnementale et / ou une température d'efficacité (B), et
- corréler ladite température environnementale et / ou ladite température d'efficacité (B) avec le résultat de lecture de la consommation et / ou de la fréquence de consommation (A), et
- déterminer grâce à cela si une situation de chauffage anormale s'est produite, et / ou
- si le brûleur fonctionne efficacement, suivi par l'étape consistant à
- transmettre les informations de la situation de chauffage et / ou de l'efficacité du brûleur via des moyens de télécommunication vers un récepteur adapté.

2. Procédé selon la revendication 1, dans lequel ledit résultat de lecture (A) est établi en corrélant ladite la consommation et / ou ladite fréquence de consommation avec une consommation et / ou une fréquence de consommation prédéterminée.

3. Procédé selon la revendication 1, dans lequel la température environnementale et/ou la température d'efficacité (B) est une température ambiante intérieure et / ou une température extérieure et / ou une température d'un réservoir d'eau chaude et / ou un nombre de degrés-jour.

4. Procédé selon la revendication 1, comprenant en outre les étapes consistant à
- déterminer une pluralité de valeurs de pression dans un tuyau d'aspiration reliant ledit brûleur de chauffage à un conteneur de liquide, tel que du carburant pendant au moins un cycle d'aspiration et de non aspiration du tuyau (C),
- déterminer une valeur de pression la plus basse et une valeur de pression la plus haute dans le tuyau d'aspiration pendant le au moins un cycle (D),
- soustraire la valeur de pression la plus basse de la valeur de pression la plus haute (E),
- corréler ledit résultat avec une valeur de niveau de liquide prédéterminée (F), et ainsi
- obtenir un résultat de lecture du niveau du liquide dans ledit conteneur (G),
- corréler le résultat d'au moins un des paramètres de (C) avec une valeur prédéterminée dudit au moins un paramètre de (C),
- facultativement, répéter les étapes ci-dessus (C à G) au moins deux fois.

5. Procédé selon la revendication 1, dans lequel la température de l'eau de tuyau et / ou la température extérieure de l'eau de tuyau et / ou la température d'au moins un radiateur est déterminée.

6. Procédé selon la revendication 4, dans lequel ladite pluralité de valeurs de pression est déterminée à a fois pendant l'aspiration et la non aspiration.

7. Procédé selon la revendication 1, dans lequel le liquide est un carburant.

8. Procédé selon la revendication 1, dans lequel la valeur de pression dans le tuyau d'aspiration est déterminée par un capteur de pression.

9. Procédé selon la revendication 8, dans lequel le capteur de pression est un transmetteur différentiel.

10. Procédé selon la revendication 7, dans lequel le capteur de pression est un capteur à raccord en T.

11. Procédé selon la revendication 8, dans lequel un mouvernent de température et une non linéarité du capteur sont compensées.

12. Procédé selon l'une quelconque des revendications précédentes, dans lequel la durée de temps entre la détermination de la première valeur de pression et la détermination de la seconde valeur de pression se situe à dans un cycle du tuyau d'aspiration.

13. Procédé selon la revendication 1, dans lequel une alarme est initiée lors de la survenue d'une situation anormale.

14. Procédé selon la revendication 13, dans lequel l'initiation de l'alarme se fait lorsque la température de l'eau chaude descend en dessous d'une valeur prédéterminée.

15. Procédé selon la revendication 13, dans lequel l'initiation de l'alarme se fait lorsque la température intérieure descend en dessous d'une valeur prédéterminée.

16. Procédé selon la revendication 13, dans lequel l'initiation de l'alarme se fait lorsque le brûleur consomme une quantité accrue de liquide par rapport à une valeur prédéterminée.

17. Procédé selon la revendication 13, dans lequel l'initiation de l'alarme se fait lorsque le brûleur consomme une quantité diminuée de liquide par rapport à une valeur prédéterminée.

18. Procédé selon la revendication 13, dans lequel l'initiation de l'alarme se fait lorsqu'il y a une coupure de courant.

19. Procédé selon la revendication 13, dans lequel l'initiation de l'alarme se fait lorsque les paramètres (A), tels que définis dans la revendication 1, changent.
